# EUROPEAN PATENT APPLICATION

(11) **EP 1 289 173 A2**
(43) Date of publication of application: **05.03.2003**
(21) Application number: 02013313.8
(22) Date of filing: 18.06.2002
(51) Int. Cl.: H04B 10/10

(54) **Optical wireless communication device**

(30) Priority: 29.08.2001 JP 2001260349; 29.08.2001 JP 2001260372
(71) Applicant: Allied Telesis K. K., Shinagawa-ku, Tokyo (JP)
(72) Inventor: Nagai, Takumi, Shinagawa-ku, Tokyo (JP)
(74) Representative: Grünecker, Kinkeldey, Stockmair & Schwanhäusser Anwaltssozietät

(57) **Abstract**

An optical wireless communication device for performing communication by laser light. A primary light-emitting unit emits a laser light and a processing unit adjusts divergence of the laser light. A laser light adjustment method is provided wherein an optical wireless communication device measures a distance to an object which is to be irradiated with laser light and adjusts divergence and/or output power of the laser light based on the measured distance. Further, an optical wireless communication device, an optical wireless communication system, a management apparatus and a computer-readable medium storing a management program are provided, which allow a user to easily check a communication status of the optical wireless communication device.

## Description

### BACKGROUND OF THE INVENTION

### 1. Field of the Invention

The present invention relates to an optical wireless communication device and a laser light adjustment method. More particularly, the present invention relates to an optical wireless communication device that measures a distance to an object which is to be irradiated with laser light and adjusts divergence and/or output power of the laser light based on the measured distance. Further, the present invention also relates to an optical wireless communication device, an optical wireless communication system, a management apparatus and a computer-readable medium storing a management program, which allow a user to easily check a communication status of the optical wireless communication device.

### 2. Description of the Related Art

An optical wireless communication device adopting a point-to-point communication technique generally uses a laser diode as a light-emitting device serving as a light source. Laser light emitted by the laser diode has sharp divergence and high output power and therefore damping depending on the distance is small, thus enabling long-range optical wireless communication.

In a conventional optical wireless communication device, the divergence and output power of the laser light to be emitted are fixed or set in advance, for example, by the manufacturer of the device before shipping, and can not easily be adjusted if a need should arise. Also, a transmission range, i.e. a distance between two optical communication devices which enables these devices to communicate normally, is determined in accordance with a specification of the optical wireless communication device. In a case of optical wireless communication between two optical wireless communication devices that are separated from each other by a greater distance than the transmission range determined in accordance with the specification, a beam area of the laser light received becomes wider while the output power thereof becomes lower. Thus, in a case of optical wireless communication over a longer distance than the determined transmission range, communication error ratio may increase between the two optical wireless communication devices. In a conventional optical wireless communication device, such an error ratio is not easily rectified, for example, by adjusting the divergence and/or output power of the emitted laser light.

Moreover, in a case of optical communication between two wireless communication devices that are separated from each other by a shorter distance than the transmission range in accordance with the specification, the beam area of the received laser light becomes narrower while the output power thereof becomes higher. Thus, when the distance between the two optical wireless communication devices is much shorter than the determined transmission range, life of a light-receiving device that receives the laser light is reduced.

In addition, in some conventional optical wireless communication devices, optical wireless communication can be enabled by collimating an optical axis of laser light by means of a collimator. However, a price of such a conventional optical wireless communication device is increased if the collimator is incorporated therein, and the size of the optical wireless communication device is also increased. Furthermore, if the optical axis of the laser light is not accurately coincident with the aim of the collimator, the optical axis of the laser light cannot be accurately collimated.

### SUMMARY OF THE INVENTION

Therefore, it is an object of the present invention to provide an optical wireless communication device, a laser light adjustment method, an optical wireless communication system, a management apparatus and a computer-readable medium storing a management program, which are capable of overcoming the above drawbacks accompanying the conventional art. The above and other objects can be achieved by combinations described in the independent claims . The dependent claims define further advantageous and exemplary combinations of the present invention.

According to the first aspect of the present invention, an optical wireless communication device for performing communication by laser light, the optical wireless communication device including a primary light-emitting unit operable to emit a first laser light, characterized in that the optical wireless communication device comprises: a processing unit operable to adjust divergence of the first laser light based upon a predetermined condition of the optical wireless communication device to optimize the communication performed by the first laser light.

The optical wireless communication device may further comprise a measurement unit operable to measure a distance of separation of the optical wireless communication device from an object which is irradiated with the first laser light, and that the processing unit adjusts the divergence of the first laser light based on the measured distance as the predetermined condition of the optical wireless communication device.

The optical wireless communication device may further comprise a secondary light-emitting unit operable to emit a second laser light having an optical axis approximately parallel to an optical axis of the first laser light, wherein the measurement unit measures the distance by irradiating the object with the second laser light.

The optical wireless communication device may further comprise a detecting unit operable to detect an irradiated position of the object, which is irradiated with the second laser light, from a position that is different from a corresponding position of the secondary light-emitting unit, and that the measurement unit measures the distance based on the irradiated position of the object detected by the detecting unit.

The optical wireless communication device may further comprise a light-receiving unit operable to receive the second laser light after reflection from the object, and that the measurement unit measures the distance based on a light-emission time at which the secondary light-emitting unit emitted the second laser light and a light-received time at which the light-receiving unit received the second laser light.

According to the optical wireless communication device shown above, the optical wireless communication device can adjust divergence of the laser light based on a predetermined condition. Therefore, the optical wireless communication devices can adjust beam area or beam intensity of the laser light irradiated on a target optical wireless communication device. So, the optical wireless communication device can establish suitable communication with the target optical wireless communication device.

And also, the optical wireless communication device can measure a distance of separation to the target optical wireless communication device as a part of the predetermined condition. Therefore, the optical wireless communication device can adjust divergence of the laser light based on the measured distance to establish suitable communication with the target optical wireless communication device.

The optical wireless communication device may further comprise a light-emission control unit operable to prohibit light emission by the primary light-emitting unit in a case where the secondary light-emitting unit emits the second laser light. Therefore, it is possible to prevent laser light being cast onto a person who works near a pair of the optical wireless communication devices.

The second laser light emitted by the secondary light-emitting unit may have a higher output power than an output power of the first laser light emitted by the primary light-emitting unit. Therefore, it is possible for the optical wireless communication device to measure a longer distance to the target optical wireless communication device than a suitable distance for communication.

The primary light-emitting unit may have a switching rate higher than a switching rate of the secondary light-emitting unit. Therefore, it is possible for the optical wireless communication device to communicate with the target optical wireless communication device at a higher communication rate.

The primary light-emitting unit may have a higher operational durability than the secondary light-emitting unit. So, the optical wireless communication device can have a longer lifetime.

The optical wireless communication device may further comprise a measurement unit operable to measure a distance of separation of the optical wireless communication device from an object which is irradiated with the first laser light, and that the processing unit adjusts the divergence of the first laser light based on previously stored divergence data that corresponds to the measured distance as the predetermined condition of the optical wireless communication device.

The optical wireless communication device may further comprise a measurement unit operable to measure a distance of separation of the optical wireless communication device from an object which is irradiated with the first laser light, and a memory unit operable to store at least the distance of separation as the predetermined condition of the optical wireless communication device and at least divergence data to correspond with the distance of separation, and that the processing unit adjusts the divergence of the first laser light based on previously stored divergence data.

The optical wireless communication device may further comprise a memory unit operable to store at least a distance of separation of the optical wireless communication device from an object which is irradiated with the first laser light as the predetermined condition of the optical wireless communication device and at least divergence data to correspond with the distance of separation, and that the processing unit adjusts the divergence of the first laser light based on previously stored divergence data to adjust a transmission range of the first laser light.

The predetermined condition of the optical wireless communication device may be a distance of separation of the optical wireless communication device from a receiving device which is irradiated with the first laser light, and the optical wireless communication device may further comprise divergence data corresponding to the distance of separation, the divergence data optimizing communication performed by the first laser light with the receiving device when the optical wireless communication device is separated from the receiving device by the distance of separation, and THAT the processing unit may adjust the divergence of the first laser light based on previously stored divergence data to adjust a transmission range of the first laser light.

According to the optical wireless communication device shown above, the optical wireless communication device can measure a distance to the target optical wireless communication device and adjust divergence of the laser light based on the measured distance and previously stored divergence data. So, the optical wireless communication device can read most suitable setting data for adjusting divergence of the laser light based on the measured distance.

According to the second aspect of the present invention, an optical wireless communication device for performing communication by using laser light, the optical wireless communication device including a light-emitting unit operable to emit laser light, characterized in that the optical wireless communication device comprises: a measurement unit operable to measure a distance to an object which is to be irradiated with the laser light; and a processing unit operable to adjust an output power of the laser light based on the measured distance.
Therefore, the optical wireless communication device can measure a distance to the target optical wireless communication device and adjust output power of the laser light based on the measured distance to establish suitable communication with a target optical wireless communication device.

According to the third aspect of the present invention, a method of adjusting laser light, for use in an optical wireless communication device that performs communication by using the laser light, the laser light adjustment method including emitting the laser light, characterized in that the laser light adjustment method comprises adjusting divergence of the laser light based upon a predetermined condition of the optical wireless communication device.

The laser light adjustment method may further comprise measuring a distance to an object which is to be irradiated with the laser light, and that the divergence of the laser light may be adjusted based on the measured distance as the predetermined condition of the optical wireless communication device.

According to the laser light adjustment method shown above, an optical wireless communication device can adjust divergence of the laser light based on predetermined condition. Therefore, the optical wireless communication devices can adjust beam area or beam intensity of the laser light irradiated on a target optical wireless communication device. So, the optical wireless communication device can establish suitable communication with the target optical wireless communication device.
And the optical wireless communication device can also measure a distance to the target optical wireless communication device. In this case, the optical wireless communication device can adjust divergence of the laser light based on the measured distance to establish suitable communication with a target optical wireless communication device.

According to the fourth aspect of the present invention, a method of adjusting laser light, for use in an optical wireless communication that performs communication by using the laser light, the laser light adjustment method including emitting the laser light, characterized in that the laser light adjustment method comprises: measuring a distance to an object which is to be irradiated with the laser light; and adjusting an output power of the laser light based on the measured distance.
Therefore, the optical wireless communication device can measure a distance of separation to the target optical wireless communication device and adjust output power of the laser light based on the measured distance to establish suitable communication with the target optical wireless communication device.

According to the fifth aspect of the present invention, an optical wireless communication device for performing communication by using light, the optical wireless communication device including a light-receiving unit operable to receive the light, characterized in that the optical wireless communication device further comprises an information unit operable to issue a notification indicative of a quality of the light received by the light-receiving unit.

The light may be laser light. In this case, the light-receiving unit receives the laser light, and the information unit issues the notification indicative of a quality of the laser light received by the light-receiving unit. Alternatively, the light may be infrared light. In this case, the light-receiving unit receives the infrared light, and the information unit issues the notification indicative of a quality of the infrared light received by the light-receiving unit.

The quality of the light may be an averaged input power of the light in a predetermined time period.

The information unit may include an indicator operable to emit light as the notification indicative of a quality of the light, and a light-emission control unit may be further provided to control the emission by the indicator based on the quality of the light received by the light-receiving unit.

The light-emission control unit may control an on-off period during which the emission of light by the indicator goes on and off based on the quality of the light received by the light-receiving unit.

The light-emission control unit may control an output power of the light emitted by the indicator based on the quality of the light received by the light-receiving unit.

The indicator may include a plurality of light-emitting elements, and the light-emission control unit may control which one or more of the plurality of light-emitting elements emits light based on the quality of the light received by the light-receiving unit.
According to the optical wireless communication device shown above, the user can easily determine or check the communication status of the optical wireless communication devices.

According to the sixth aspect of the present invention, an optical wireless communication device for performing optical communication, characterized in that the optical wireless communication device comprises: a light-receiving unit operable to receive light and to convert the received light into an electric signal; an output unit operable to output the converted electric signal as an outputted signal; an input unit operable to receive another electric signal as an inputted signal; a selector operable to select one of the another electric signal received by the input unit and the converted electric signal, and to output the selected electric signal; and a light-emitting unit operable to convert the selected electric signal into light and to output the converted light.

According to the seventh aspect of the present invention, an optical wireless communication system including a first optical wireless communication device and a second optical wireless communication device that perform optical communication and a management apparatus that manages the optical communication between the first and second optical wireless communication devices, characterized in that the first optical wireless communication device comprises : a first light-receiving unit operable to receive light sent from the second optical wireless communication device and to convert the received light into an electric signal; a first output unit operable to output the converted electric signal to the management apparatus; a first input unit operable to receive an electric signal from the management apparatus; and a first light-emitting unit operable to convert the received electric signal into light and to send the converted light to the second optical wireless communication device, and that the second optical wireless communication device comprises: a second light-receiving unit operable to receive the light sent from the first optical wireless communication device and to convert the light into an electric signal; and a second light-emitting unit operable to convert the electric signal of the second light-receiving unit into light and to send the light converted by the second light-emitting unit to the first optical wireless communication device.

The management apparatus may include: an electric signal generate unit operable to generate an electric signal to be output to the first optical wireless communication device; a transmit unit operable to transmit the electric signal generated by the electric signal generate unit to the first optical wireless communication device; a receive unit operable to receive the converted electric signal output from the first optical wireless communication device; and a compare unit operable to compare the electric signal transmitted from the transmit unit with the converted electric signal received by the receive unit.

The management apparatus may further include a diagnostic unit operable to determine whether or not the optical communication between the first and second optical wireless communication devices is performed normally, based on a result of the comparison by the compare unit.

The diagnostic unit may determine that the optical communication between the first and second optical wireless communication devices is not performed normally when the electric signal transmitted from the transmit unit is different from the converted electric signal received by the receive unit, and the management apparatus may further include a processing unit operable to adjust divergence of light sent from the first light-emitting unit of the first optical wireless communication device when the diagnostic unit determines that the optical communication between the first and second optical wireless communication devices is not performed normally.

The diagnostic unit may determine that the optical communication between the first and second optical wireless communication devices is not performed normally when the electric signal transmitted from the transmit unit is different from the converted electric signal received by the receive unit, and the management apparatus may further include a processing unit operable to adjust an output power of light sent from the first light-emitting unit of the first optical wireless communication device when the diagnostic unit determines that the optical communication between the first and second optical wireless communication devices is not performed normally.

The second optical wireless communication device may further include: a second input unit operable to receive an inputted electric signal; and a selector operable to select one of the inputted electric signal received by the second input unit and the electric signal converted by the second light-receiving unit, and to supply the selected electric signal, and that the second light-emitting unit converts the selectedelectric signal supplied from the selector into light and sends the converted light thus obtained to the first optical wireless communication device.

The second optical wireless communication device may further include a mode select unit operable to select one of operation modes of the second optical wireless communication device, the operation modes including a communication mode, in which the optical communication is performed between the first and second optical wireless communication devices, and a test mode, in which a test for the optical communication is performed, and the selector selects the electric signal converted by the second light-receiving unit when the test mode is set in the second optical wireless communication device by the mode select unit.

According to the eighth aspect of the present invention, a management apparatus for managing optical communication between a first optical wireless communication device and a second optical wireless communication device, characterized in that the management apparatus comprises: an electric signal generate unit operable to generate a first electric signal; a transmit unit operable to transmit the first electric signal generated by the electric signal generate unit to the first optical wireless communication device; a receive unit operable to receive, from the first optical wireless communication device, a second electric signal generated by converting the first electric signal generated by the electric signal generate unit into light in the first optical wireless communication device, sending the light converted in the first optical wireless communication device to the second optical wireless communication device, in the second optical wireless communication device, converting the light received from the first optical wireless communication device into a third electric signal and then converting the third electric signal into light in the second optical wireless communication device, sending the light converted in the second optical wireless communication device to the first optical wireless communication device, and, in the first optical wireless communication device, converting the light sent from the second optical wireless communication device to the first optical wireless communication device into the second electric signal; a compare unit operable to compare the first electric signal transmitted from the transmit unit with the second electric signal received by the receive unit; and a diagnostic unit operable to determine whether or not the optical communication is performed normally, based on a result of the comparison by the compare unit.

According to the ninth aspect of the present invention, a computer-readable medium storing a management program for a management apparatus that manages optical communication between a first optical wireless communication device and a second optical wireless communication device, characterized in that the management program comprises: an electric signal generate module operable to make the management apparatus generate a first electric signal; a transmit module operable to make the management apparatus transmit the first electric signal generated by the management apparatus to the first optical wireless communication device; a receive module operable to make the management apparatus receive, from the first optical wireless communication device, a second electric signal generated by converting the first electric signal generated by the management apparatus into light in the first optical wireless communication device, sending the light converted in the first optical wireless communication device to the second optical wireless communication device, in the second optical wireless communication device, converting the light received from the first optical wireless communication device into a third electric signal and converting the third electric signal into light in the second optical wireless communication device, sending the light converted in the second optical wireless communication device to the first optical wireless communication device, and converting the light sent from the second optical wireless communication device to the first optical wireless communication device into the second electric signal; a compare module operable to make the management apparatus compare the first electric signal generated by the management apparatus with the second electric signal received by the management apparatus; and a diagnostic module operable to make the management apparatus determine whether or not the optical communication is performed normally, based on a result of the comparison by the management apparatus.

According to the optical wireless communication device, the optical wireless communication system, the management apparatus, and/or the optical wireless communication device can have a test mode for testing communication between two optical wireless communication devices. And also, one of the optical wireless communication devices can return a signal received from another optical wireless communication device. Therefore, communication status or capability can be checked by comparing a signal sent from one of the optical wireless communication devices to another optical wireless communication device and the signal returned by another optical wireless communication device. Using this method, a management apparatus for the optical wireless communication may check the communication status or capability.

The summary of the invention does not necessarily describe all necessary features of the present invention. The present invention may also be a sub-combination of the features described above. The above and other features and advantages of the present invent ion will become more apparent from the following description of the embodiments taken in conjunction with the accompanying drawings.

### BRIEF DESCRIPTION OF THE DRAWINGS

Fig. 1 shows a configuration of a computer network 100 according a first embodiment of the present invention.

Fig. 2 shows a structure of an optical wireless communication device 10a according to the first embodiment of the present invention.

Fig. 3 shows a data format stored in a memory unit 104 of the optical wireless communication device shown in Fig. 2.

Figs. 4A and 4B illustrate exemplary distance-measuring methods performed by a measurement unit 112 of the optical wireless communication device 10a shown in Fig. 2 according to the first embodiment of the present invention.

Fig. 5 shows a configuration of a computer network 300 according a second embodiment of the present invention.

Fig. 6 shows structures of optical wireless communication devices 210a and 210b according to the second embodiment of the present invention.

Fig. 7 shows a structure of a management apparatus 220a according to the second embodiment of the present invention.

Fig. 8 shows a sequence of communication among the optical wireless communication devices 210a and 210b and the management apparatus 220a.

Fig. 9 shows a hardware configuration of the management apparatus 220a.

### DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

### (Embodiment 1)

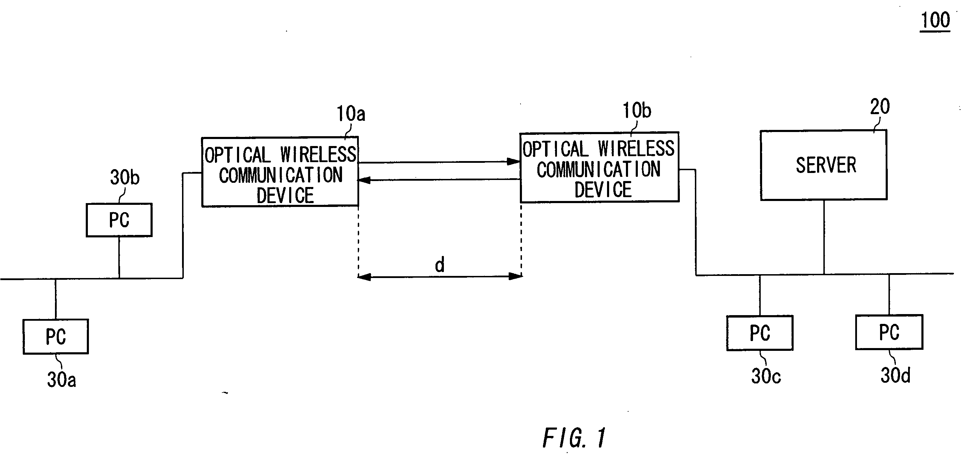

Fig. 1 shows a configuration of a computer network 100 of the first embodiment of the present invention. The computer network 100 is a LAN (Local Area Network), for example, and includes a server computer 20 that provides various types of service in the computer network 100, client computers (PCs) 30a, 30b, 30c and 30d that use the service provided by the server computer 20 and perform communication in the computer network 100, and optical wireless communication devices 10a and 10b each of which performs communication using laser light.

The optical wireless communication devices 10a and 10b are optical wireless interconnecting devices such as optical wireless hubs, that interconnect the communication between the client computer 30a or 30b and the server computer 20 or the client computer 30c or 30d. The client computers 30a and 30b communicate with the server computer 20 via the optical wireless communication devices 10a and 10b, thus using the service provided by the server computer 20. The client computers 30a and 30b communicate with the client computers 30c and 30d via the optical wireless communication devices 10a and 10b.

The optical wireless communication device 10a measures a distance d to the optical wireless communication device 10b that is an object to be irradiated with laser light emitted from the optical wireless communication device 10a, and then adjusts or sets the divergence and/or output power of the laser light cast onto the optical wireless communication device 10b based on the measured distance d. The optical wireless communication device 10a then transmits data to the optical wireless communication device 10b by using the laser light having the adjusted divergence and/or output power.

The optical wireless communication device 10b also measures the distance d to the optical wireless communication device 10a that is an object to be irradiated with laser light emitted from the device 10b, and then adjusts or sets the divergence and/or output power of the laser light cast onto the optical wireless communication device 10a. The optical wireless communication device 10b then transmits data to the optical wireless communication device 10a by using the laser light having the adjusted divergence and/or output power.

It is preferable that each of the optical wireless communication devices 10a and 10b periodically perform the measurement of the distance d and the setting for the laser light based on the measured distance d at predetermined time intervals. Each of the optical wireless communication devices 10a and 10b may perform the measurement of the distance d and the setting for the laser light based on the measured distance d by a user's instruction, for example, by pressing a button down.

It is also preferable that each of the optical wireless communication devices 10a and 10b use infrared laser light for the communication. Alternatively, the optical wireless communication devices 10a and 10b can use visible light for the communication. Also, the optical wireless communication devices 10a and 10b may use laser light having a predetermined wavelength.

According to the optical wireless communication devices 10a and 10b of the present embodiment, the distance from the device which emits the laser light to the device which is to be irradiated with the emitted laser light is first measured, and then the divergence and/or output power of the laser light can be adjusted based on the measured distance. Thus, each of the optical wireless communication devices 10a and 10b that is arranged with an arbitrary interval or distance of separation can adjust the divergence and/or output power of the laser light emitted there from so as to adjust a beam area of the laser light on the other one of the optical wireless communication devices 10a and 10b. Therefore, according to the optical wireless communication devices 10a and 10b of the present embodiment, communication error between the optical wireless communication devices 10a and 10b can be reduced or eliminated, so that the optical wireless communication can take place between the optical wireless communication devices 10a and 10b with high accuracy and reliability.

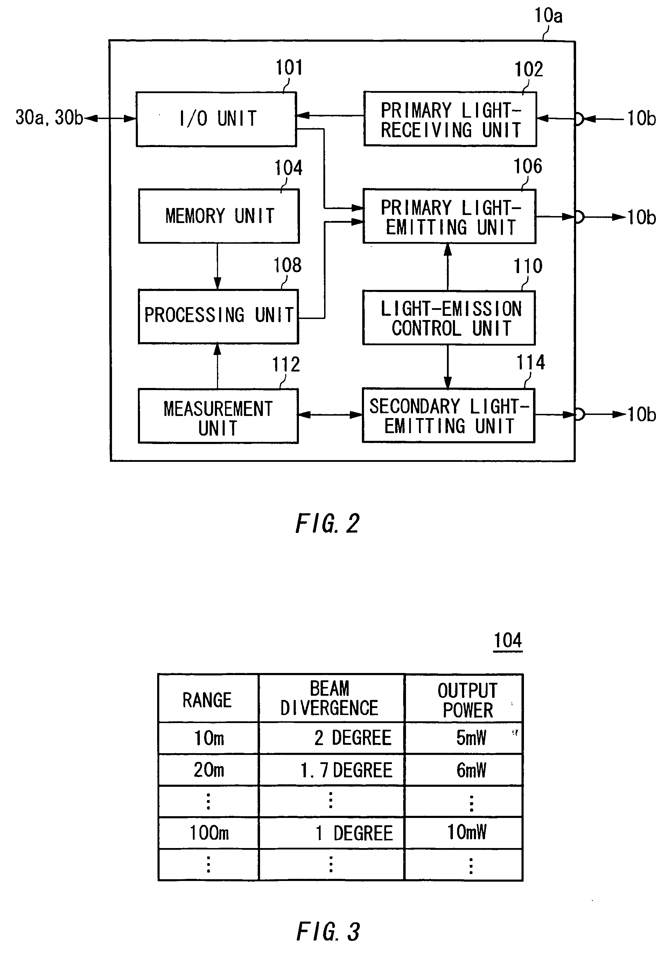

Fig. 2 illustrates a structure of the optical wireless communication device 10a of the present embodiment. The optical wireless communication devices 10a and 10b have the same structure and therefore only the structure and operation of the optical wireless communication device 10a are described as a typical example.

The optical wireless communication device 10a includes a primary light-receiving unit 102 that receives laser light emitted from the optical wireless communication device 10b, a primary light-emitting unit 106 that emits laser light toward the optical wireless communication device 10b, an I/O unit 101 that transmits data to and/or receives data from an external device such as the client computer 30a, 30b or the like, a memory unit 104 that stores setting information for the laser light, a processing unit 108 that adjusts the divergence and/or output power of the laser light, a secondary light-emitting unit 114 that generates laser light approximately parallel to the laser light emitted by the primary light-emitting unit 106, a measurement unit 112 that measures the distance to the optical wireless communication device 10b which is to be irradiated with the laser light from the optical wireless communication device 10a, and a light-emission control unit 110 that controls the emission of the laser light of each of the primary and secondary light-emitting units 106 and 114.

The primary light-receiving unit 102 converts the laser light received from the optical wireless communication device 10b into an electric signal and supplies it to the I/O unit 101. The I/O unit 101 sends the electric signal received from the primary light-receiving unit 102 to the client computers 30a and 30b. Moreover, the I/O unit 101 receives an electric signal from the client computer 30a or 30b and supplies it to the primary light-emitting unit 106. The primary light-emitting unit 106 then converts the received electric signal into laser light to send it to the optical wireless communication device 10b.

The measurement unit 112 measures the distance between the optical wireless communication devices 10a and 10b by irradiating the optical wireless communication device 10b with the laser light emitted from the secondary light-emitting unit 114. The processing unit 108 adjusts the divergence and/or output power of the laser light emitted from the primary light-emitting unit 106 based on the distance measured by the measurement unit 112 and the setting information for the laser light that is stored in the memory unit 104. The primary light-emitting unit 106 then emits the laser light based on the divergence and/or output power thus adjusted by the processing unit 108.

The light-emission control unit 110 prohibits the light emission by the primary light-emitting unit 106 in a case where the secondary light-emitting unit 114 emits the laser light. The light-emission control unit 110 may prohibit the light emission by the secondary light-emitting unit 114 in a case where the primary light-emitting unit 106 emits the laser light. Moreover, the light-emission control unit 110 may limit the output power of the laser light emitted from the primary light-emitting unit 106 in the case where the secondary light-emitting unit 114 emits the laser light. Also, the light-emission control unit 110 may limit the output power of the laser light emitted from the secondary light-emitting unit 114 in the case where the primary light-emitting unit 106 emits the laser light.

It is preferable that the laser light emitted from the secondary light-emitting unit 114 have an output power higher than that of the laser light emitted from the primary light-emitting unit 106, since the laser light emitted from the secondary light-emitting unit 114 is used for the measurement of the distance between the optical wireless communication devices 10a and 10b. It is also preferable that the switching rate of the laser light of the primary light-emitting unit 106 be higher than that of the secondary light-emitting unit 114, since the laser light emitted from the primary light-emitting unit 106 is used for optical communication with the optical wireless communication device 10b. Moreover, it is preferable that the primary light-emitting unit 106 be more durable, i.e., have a longer operational life based on its manufacturing specifications and consequently more expensive, than the secondary light-emitting unit 114 since a period during which the primary light-emitting unit 106 emits the laser light is longer than that of the secondary light-emitting unit 114.

According to the optical wireless communication device 10a of the present embodiment, the light-emission control unit 110 controls the light emission by the primary and secondary light-emitting units 106 and 114. Thus, it is possible to prevent laser light being cast onto a person who works near the optical wireless communication device 10a or 10b, thereby reducing the risk of injury to a person by inadvertent exposure to the laser light.

Fig. 3 shows a data format of a laser-light setting file stored in the memory unit 104. The laser-light setting file includes a range field, a beam-divergence field, and an output power field. The range field stores one or more predetermined ranges or distances between the optical wireless communication devices 10a and 10b. The beam-divergence field stores one or more divergence data, each of which indicates the divergence of the laser light so as to correspond to the one or more distances, respectively, stored in the range field. The output-power field stores one or more output-power data of the laser light to correspond to the aforementioned one or more distances, respectively.

The processing unit 108 refers to the laser-light setting file and sets or adjusts the laser light to be emitted by the primary light-emitting unit 106 based on the divergence and/or output power that are stored in the laser-light setting file to correspond to the distance measured by the measurement unit 112. The setting information stored in the laser-light setting file may be stored by the user or set when the optical wireless communication device is shipped from the manufacturer. The user sets the setting information stored in the laser-light setting file, for example, in a case where the manufacturer sends the user the setting information through the Internet or by using a recording medium and asks the user to store the setting information in accordance with the information thus sent, or in a case where the user wants to slightly change the setting information that was stored at the time when the optical wireless communication device was shipped from the manufacturer.

According to the optical wireless communication device 10a of the present embodiment, information regarding the divergence and/or output power of the laser light that is appropriate for the distance of separation between the optical wireless communication devices 10a and 10b is stored in advance in the memory unit 104. Thus, when the optical wireless communication devices 10a and 10b are arranged so as to be separated from each other by a predetermined distance, the divergence and/or output power of the laser light can be appropriately set or adjusted to adjust transmission range in accordance with the predetermined distance. Therefore, according to the present embodiment, optical wireless communication can be performed between the optical wireless communication devices 10a and 10b with accuracy and reliability.

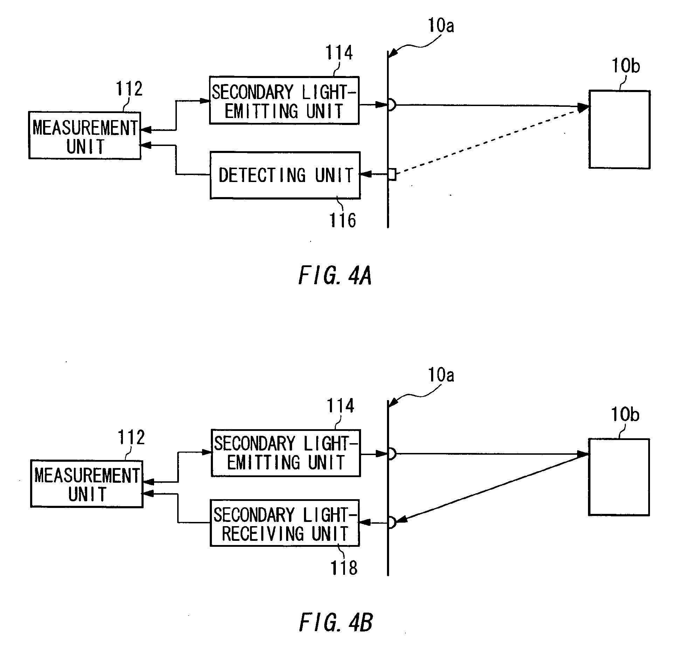

Figs. 4A and 4B show exemplary measuring methods that are performed by the measurement unit 112. As shown in Fig. 4A, the optical wireless communication device 10a further includes a detecting unit 116 that detects an irradiated position on the optical wireless communication device 10b, which is irradiated with the laser light from the secondary light-emitting unit 114 of the device 10a. The detecting unit 116 detects the irradiated position on the optical wireless communication device 10b, which is irradiated with the laser light from the secondary light-emitting unit 114 of the optical wireless communication device 10a, from a position different from the position at which the secondary light-emitting unit 114 of the device 10a emits the laser light. The measurement unit 112 measures the distance between the optical wireless communication devices 10a and 10b based on the irradiation position detected by the detecting unit 116. Thus, the measurement unit 112 measures the distance between the optical wireless communication devices 10a and 10b by the triangulation method.

In an alternative example, the optical wireless communication device 10a may further include a secondary light-receiving unit 118 that receives the laser light which was emitted from the secondary light-emitting unit 114 of the device 10a and then reflected from the optical wireless communication device 10b, as shown in Fig. 4B. In this example, the measurement unit 112 measures the distance between the optical wireless communication devices 10a and 10b based on a time at which the secondary light-emitting unit 114 emitted the laser light and a time at which the secondary light-receiving unit 118 received the laser light. In other words, the measurement unit 112 measures the distance between the optical wireless communication devices 10a and 10b by using a velocity of the laser light emitted from the secondary light-emitting unit 114.

According to the optical wireless communication device 10a of the present embodiment, the distance between the optical wireless communication devices 10a and 10b can be measured with high accuracy by using the aforementioned techniques. Then, the divergence and/or output power of the laser light to be emitted can be appropriately adjusted based on the measured distance . Thus, optical communication can be per formed between the optical wireless communication devices 10a and 10b with high accuracy and, therefore, communication in the computer network 100 can also be performed with high accuracy and reliability.

### (Embodiment 2)

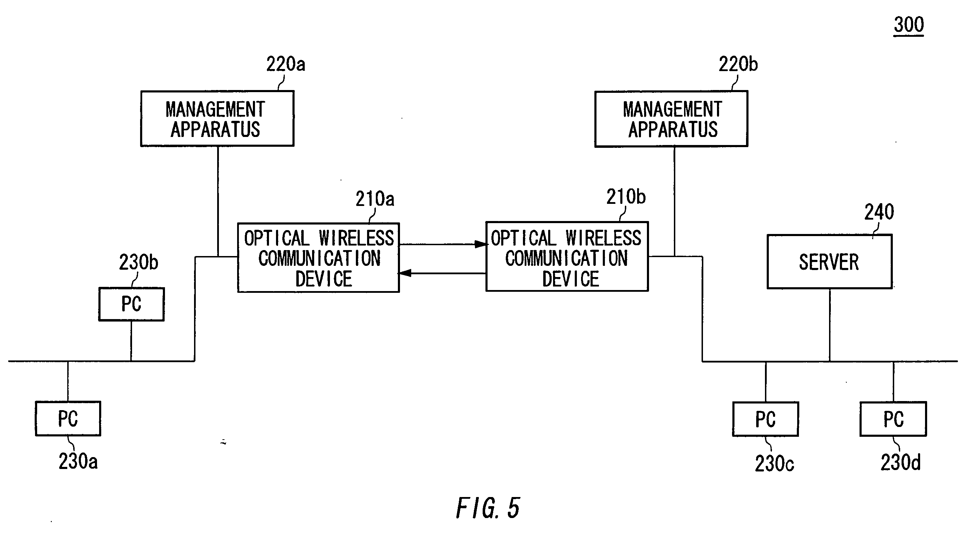

Fig. 5 shows a configuration of a computer network 300 of the second embodiment of the present invention. The computer network 300 is a LAN, for example, and includes optical wireless communication devices 210a and 210b that perform optical communication, management apparatuses 220a and 220b that manage the optical transmission between the optical wireless communication devices 210a and 210b, a server computer 240 that provides various types of service in the computer network 300, and client computers (PCs) 230a, 230b, 230c and 230d that use the service provided by the server computer 240 and perform communication in the computer network 300.

The optical wireless communication devices 210a and 210b are optical wireless interconnecting devices such as optical wireless hubs, which interconnect the communication between the client computer 230a or 230b and the server computer 240 or the client computer 230c or 230d. The client computers 230a and 230b communicate with the server computer 240 via the optical wireless communication devices 210a and 210b, thus using the service provided by the server computer 240. The client computers 230a and 230b communicate with the client computers 230c and 230d via the optical wireless communication devices 210a and 210b.

It is desirable that the optical wireless communication devices 210a and 210b use laser light for the optical communication. Preferably, the laser light used for the optical communication between the optical wireless communication devices 210a and 210b is infrared laser light or visible laser light.

Each of the optical wireless communication devices 210a and 210b includes a unit for notifying a user of the quality of the received light, so that the user can determine or check whether or not the communication between the optical wireless communication devices 10a and 10b takes place normally. If the communication between the optical wireless communication devices 10a and 10b does not take place normally, the user can do necessary operations quickly such as, for example, adjust the divergence and/or output power of the light as described in further detail below.

The management apparatus 220a includes a processing unit that determines whether or not the communication between the optical wireless communication devices 210a and 210b is performed normally and then adjusts the divergence and/or output power of the light sent from the optical wireless communication device 210a. Similarly, the management apparatus 220b includes a processing unit that determines whether or not the communication between the optical wireless communication devices 210a and 210b is performed normally and then adjusts the divergence and/or output power of the light sent from the optical wireless communication device 210b. Thus, the communication between the optical wireless communication devices 210a and 210b can be kept normal by periodically setting or adjusting the divergence and/or output power of the light sent out from the optical wireless communication devices 210a and 210b by means of the management apparatuses 220a and 220b.

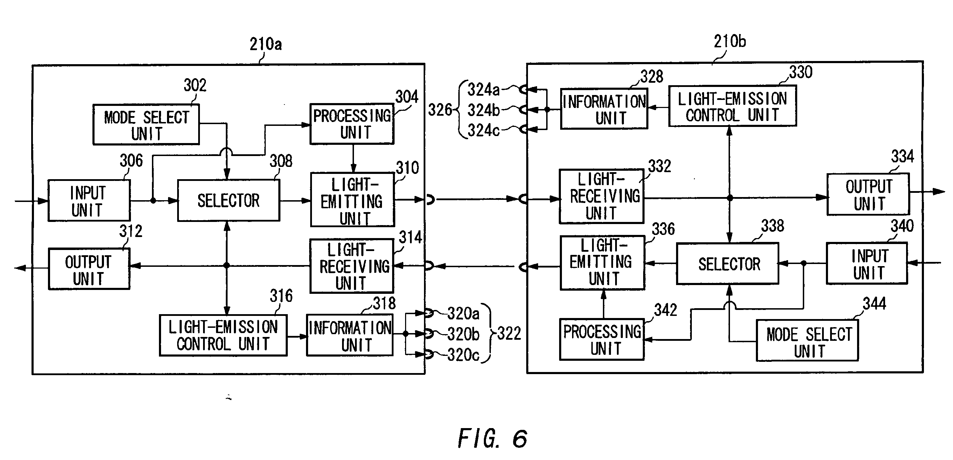

Fig. 6 shows structures of the optical wireless communication devices 210a and 210b according to the present embodiment of the present invention. The optical wireless communication device 210a includes a light-receiving unit 314 that receives light and converts the received light into an electric signal, an output unit 312 that outputs the electric signal converted by the light-receiving unit 314 to the outside of the optical wireless communication device 210a, an information unit 318 that issues a notification indicative of the quality of the light received by the light-receiving unit 314, an input unit 306 that receives an electric signal from the outside, a selector 308 that selects one of the electric signal received by the input unit 306 and the electric signal converted by the light-receiving unit 314 and then outputs the selected one, a light-emitting unit 310 that converts the selected electric signal output from the selector 308 into light to send it out, a mode select unit 302 that selects one of operation modes of the optical wireless communication device 210a, and a processing unit 304 that adjusts the divergence and/or output power of the light sent from the light-emitting unit 310. Moreover, the information unit 318 includes an indicator or signal unit 322 having a plurality of light-emitting elements 320a, 320b, and 320c. The optical wireless communication device 210a further includes a light-emission control unit 316 that controls the light emission, i.e., notification, of the indicator 322.

The light-receiving unit 314 converts the light received from the optical wireless communication device 210b into the electric signal and outputs it out. The output unit 312 then outputs the electric signal output from the light-receiving unit 314 to the outside, so that the electric signal is supplied to the client computers 230a and 230b and the management apparatus 220a.

The light-emission control unit 316 determines the quality of the light received by the light-receiving unit 314 based on the electric signal output from the light-receiving unit 314. The light-emission control unit 316 also controls the light emission by the indicator 322 of the information unit 318 based on the quality of the light received by the light-receiving unit 314 to visually inform or notify a user about the quality of the received light. For example, the light-emissioncontrol unit 316 controls anon-off period of each of the light-emitting elements 320a, 320b, and 320c of the indicator 322, i.e., the time at which each light-emitting element goes on and off, based on the quality of the light received by the light-receiving unit 314. The light-emission control unit 316 may control the output power of the light emitted by each of the light-emitting elements 320a, 320b, and 320c included in the indicator 322 based on the quality of the light received by the light-receiving unit 314. Moreover, the light-emission control unit 316 controls which one or more of the light-emitting elements 320a, 320b and 320c are allowed to emit light based on the quality of the light received by the light-receiving unit 314.

The light-receiving unit 314 may convert the received light into an analog signal or a digital signal. In a case of converting the light to the analog signal, the output unit 312 may output the signal output from the light-receiving unit 314 to the outside after converting it into the digital signal. Moreover, the light-emission control unit 316 may determine the quality of the light received by the light-receiving unit 314 based on the analog signal or the digital signal that is the electric signal output from the light-receiving unit 314.

It is desirable that the optical wireless communication device 210a perform optical communication by using laser light. In this case, the light-emitting unit 310 converts the electric signal into the laser light and then sends it out. Moreover, the light-receiving unit 314 receives the laser light, then converts the received laser light into the electric signal, and outputs the electric signal obtained by the conversion. The information unit 318 then issues the notification indicative of the quality of the laser light received by the light-receiving unit 314.

The optical wireless communication device 210a may perform the optical communication by using infrared light. In this case, the light-emitting unit 310 converts the electric signal into the infrared light and then sends it out. Moreover, the light-receiving unit 314 receives the infrared light and then converts the received infrared light into the electric signal, which is outputted. The information unit 318 then issues the notification indicative of the quality of the infrared light received by the light-receiving unit 314.

It is preferable that the light-emission control unit 316 determine the quality of the light received by the light-receiving unit 314 based on an averaged input power or maximum input power of the received light in a predetermined time period. It is also preferable that the light-emission control unit 316 control the light emission by the indicator 322 included in the information unit 318 based on the averaged or maximum input power of the light received by the light-receiving unit 314.

A processing unit 342, an input unit 340, a selector 338, a light-emitting unit 336, an output unit 334, a light-receiving unit 332, a light-emission control unit 330, an information unit 328, light-emitting elements 324a, 324b and 324c of an indicator 326 of the optical wireless communication device 210b have the same functions and operate in the same manner as the processing unit 304, the input unit 306, the selector 308, the light-emitting unit 310, the output unit 312, the light-receiving unit 314, the light-emission control unit 316, the information unit 318, the light-emitting elements 320a, 320b and 320c and the indicator 322 of the optical wireless communication device 210a, and therefore the description thereof is omitted.

Next, the operation modes of the optical wireless communication devices 210a and 210b are described. Each of the optical wireless communication devices 210a and 210b has two operation modes. More specifically, the optical wireless communication device 210a or 210b operates in a communication mode, in which normal optical communication takes place between the optical wireless communication devices 210a and 210b, and in a test mode, in which a test for the communication between the optical wireless communication devices 210a and 210b is conducted. The mode select unit 302 selects one of the operation modes of the optical wireless communication device 210a based on an instruction from the management apparatus 220a or 220b or a user's instruction. Similarly, the mode select unit 344 selects one of the operation modes of the optical wireless communication device 210b based on the instruction from the management apparatus 220a or 220b or the user's instruction.

In a case where the optical wireless communi cation devices 210a and 210b are in the communication mode, in the optical wireless communication device 210a, the selector 308 selects the electric signal received by the input unit 306 and supplies it to the light-emitting unit 310. The light-emitting unit 310 converts the electric signal received from the selector 308 into light and sends the light out to the optical wireless communication device 210b. In the optical wireless communication device 210b, the light-receiving unit 332 converts the light received from the optical wireless communication device 210a into an electric signal and outputs it. Then, the output unit 334 outputs the electric signal output from the light-receiving unit 332 to the outside of the device 210b.

Similarly, in the optical wireless communication device 210b, the selector 338 selects the electric signal received by the input unit 340 to supply it to the light-emitting unit 336. The light-emitting unit 336 then converts the electric signal received from the selector 338 into light to send it out to the optical wireless communication device 210a. The light-receiving unit 314 of the optical wireless communication device 210a then converts the light sent from the optical wireless communication device 210b into the electric signal, and then outputs it. The output unit 312 then outputs the electric signal output from the light-receiving unit 314 to the outside of the device 210a.

In a case where the optical wireless communication devices 210a and 210b are in the test mode for testing and adjusting the light sent from the optical wireless communication device 210a, the input unit 306 of the optical wireless communication device 210a receives an electric signal from the management apparatus 220a. The selector 308 then selects the electric signal received by the input unit 306 and supplies it to the light-emitting unit 310. The light-emitting unit 310 converts the electric signal received from the selector 308 into light and sends the light to the optical wireless communication device 210b. In the optical wireless communication device 210b, the light-receiving unit 332 converts the light sent from the optical wireless communication device 210a into an electric signal and then outputs it. The selector 338 selects the electric signal converted by the light-receiving unit 332 and supplies it to the light-emitting unit 336. The light-emitting unit 336 then converts the electric signal received from the selector 338 into light and sends it out to the optical wireless communication device 210a. In the optical wireless communication device 210a, the light-receiving unit 314 converts the light received from the optical wireless communication device 210b into an electric signal and outputs it. The output unit 312 then outputs the electric signal from the light-receiving unit 314 to the management apparatus 220a.

Moreover, in a case where setting information for the light to be sent from the light-emitting unit 310 is transmitted from the management apparatus 220a, the input unit 306 receives the transmitted setting information. The processing unit 304 then adjusts the divergence and/or output power of the light to be sent from the light-emitting unit 310 based on the setting information received by the input unit 306.

In a case where the optical wireless communication devices 210a and 210b are in the test mode for testing and adjusting the light sent from the optical wireless communication device 210b, the optical wireless communication device 210b receives an electric signal from the management apparatus 220b at the input unit 340. The selector 338 then selects the electric signal received by the input unit 340 and supplies it to the light-emitting unit 336. The light-emitting unit 336 converts the received electric signal into light and sends it to the optical wireless communication device 210a. In the optical wireless communication device 210a, the light-receiving unit 314 converts the light received from the optical wireless communication device 210b into an electric signal, which it outputs . The selector 308 then selects the electric signal converted by the light-receiving unit 314 and supplies it to the light-emitting unit 310. The light-emitting unit 310 then converts the electric signal received from the selector 308 into light and sends it to the optical wireless communication device 210b. In the optical wireless communication device 210b, the light-receiving unit 332 converts the light sent from the optical wireless communication device 210a into an electric signal and outputs it. The output unit 334 then outputs the electric signal output from the light-receiving unit 332 to the management apparatus 220b.

When setting information for the light to be sent from the light-emitting unit 336 was transmitted from the management apparatus 220b, the input unit 340 receives the transmitted setting information. The processing unit 342 then adjusts the divergence and/or output power of the light to be sent from the light-emitting unit 336 based on the setting information received by the input unit 340.

According to the optical wireless communication devices 210a and 210b, a user is notified of the quality of the light received by each of the light-receiving unit 314 and 332 by the light emission of the associated one of the indicators 322 and 326. Thus, the user can easily find out or check whether or not the communication between the optical wireless communication devices 210a and 210b is being performed normally. Moreover, since the optical wireless communication devices 210a and 210b have the aforementioned test mode as one of the operation modes thereof, the communication between the optical wireless communication devices 210a and 210b can be tested precisely by the management apparatuses 220a and 220b.

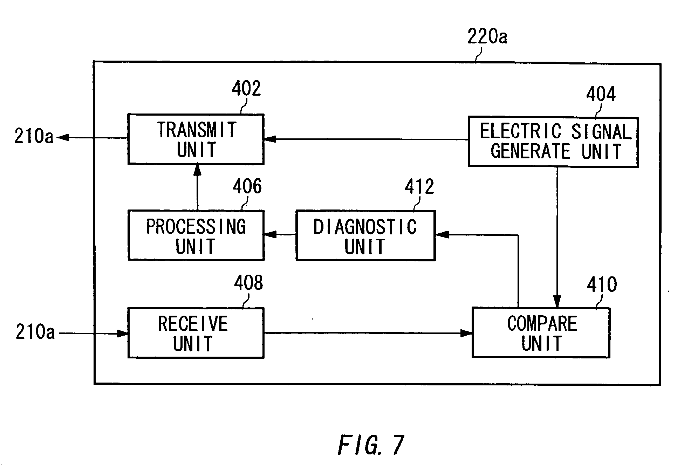

Fig. 7 is a structure of the management apparatus 220a of the present embodiment. The management apparatuses 220a and 220b have the same structure and therefore only the structure and operation of the management apparatus 220a are described as a typical example.

The management apparatus 220a includes an electric signal generate unit 404 that generates an electric signal, a transmit unit 402 that transmits the electric signal to the optical wireless communication device 210a, a receive unit 408 that receives an electric signal from the optical wireless communication device 210a, a compare unit 410 that compares the electric signal transmitted from the transmit unit 402 with the electric signal received by the receive unit 408, a diagnostic unit 412 that determines whether or not the communication between the optical wireless communication devices 210a and 210b is being performed normally, and a processing unit 406 that adjusts the divergence and/or output power of the light sent out from the optical wireless communication device 210a.

The electric signal generate unit 404 generates the electric signal used for determining whether or not the communication between the optical wireless communication devices 210a and 210b is being performed normally. The transmit unit 402 transmits the electric signal generated by the electric signal generate unit 404 to the optical wireless communication device 210a.

The optical wireless communication device 210a converts the electric signal transmitted from the transmit unit 402 into light and sends the light back to the optical wireless communication device 210b. The optical wireless communication device 210b converts the light received from the optical wireless communication device 210a into the electric signal, and then converts the electric signal again into light so as to send the light to the optical wireless communication device 210a. The optical wireless communication device 210a converts the light received from the opticalwirelesscommunicationdevice210bintotheelectricsignal, and then outputs the electric signal obtained by conversion to the management apparatus 220a.

The receive unit 408 of the management apparatus 220a receives the electric signal output from the optical wireless communication device 210a. Then, the compare unit 410 compares the electric signal transmitted from the transmit unit 402 with the electric signal received by the receive unit 408. It is preferable that the compare unit 410 compare the electric signals bit-by-bit.

The diagnostic unit 412 determines, based on the result of the comparison by the compare unit 410, whether or not the communication between the optical wireless communication devices 210a and 210b is being performed normally. In a case where the electric signal transmitted from the transmit unit 402 is different from the electric signal received by the receive unit 408, for example, the diagnostic unit 412 does not determine that the communication between the optical wireless communication devices 210a and 210b is being performed normally, i.e., the diagnostic unit 412 determines that the communication is not being performed normally.

When the diagnostic unit 412 determines that the communication between the optical wireless communication devices 210a and 210b is not performed normally, the processing unit 406 outputs the setting information used for setting or adjusting the divergence and/or output power of the light sent from the light-emitting unit 310 of the optical wireless communication device 210a. Then, the transmit unit 402 of the management apparatus 220a transmits the setting information output from the processing unit 406 to the optical wireless communication device 210a.

Moreover, in the above operation, the processing unit 406 may output the setting information by, for example, considering a value of the electric signal transmitted by the transmit unit 402 and a value of the electric signal received by the receive unit 408 and the relationship of light emission/non-emission in a region corresponding to a part of the electric signal where the communication error occurs.

For example, in a case where the communication error has been detected for a part of the electric signal that causes the optical wireless communication device 210a to emit the light, which was transmitted from the management apparatus 220a, the processing unit 406 may increase the strength of the light by improving the divergence and/or increasing the output power of the light sent out from the light-emitting unit 310 of the optical wireless communication device 210a. In another case, where the electric signal that causes the optical wireless communication device 210a to emit the light, which was transmitted from the management apparatus 220a, has not been received normally at all, the processing unit 406 may widen a light-receivable area where the light can be received by reducing the divergence of the light sent out from the light-emitting unit 310 of the optical wireless communication device 210a. In still another case, where a part of the electric signal that does not cause the light emission by the optical wireless communication device 210a, which was transmitted by the management apparatus 220a, has not been received normally, the processing unit 406 may reduce the strength of the light by reducing the divergence and/or output power of the light sent out from the light-emitting unit 310 of the optical wireless communication device 210a.

According to the management apparatus 220a of the present embodiment, the communication between the optical wireless communication devices 210a and 210b takes place normally with high accuracy and reliability. Moreover, when the communication between the optical wireless communication devices 210a and 210b does not take place normally, the communication between the devices 210a and 210b can be made normal by adjusting the divergence and/or output power of the light sent from the optical wireless communication device 210a.

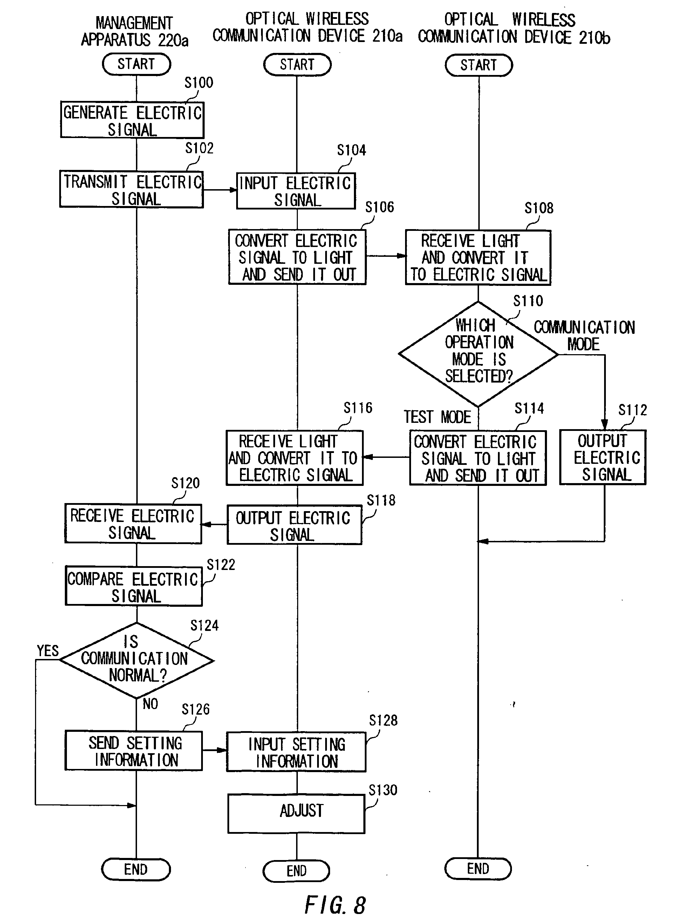

Fig. 8 shows a sequence of the communication between the optical wireless communication devices 210a and 210b according to the present embodiment. First, in the management apparatus 220a, the electric signal generate unit 404 generates the electric signal used for determining whether or not the communication between the optical wireless communication devices 210a and 210b is being performed normally (Step S100). The transmit unit 402 then transmits the electric signal generated by the electric signal generate unit 404 to the optical wireless communication device 210a (Step S102).

Then, in the optical wireless communication device 210a, the input unit 306 receives the electric signal output from the management apparatus 220a (Step S104). The light-emitting unit 310 then converts the electric signal received by the input unit 306 into light and sends the light to the optical wireless communication device 210b (Step S106).

Next, in the optical wireless communication device 210b, the light-receiving unit 332 converts the light received from the optical wireless communication device 210a into an electric signal (Step S108). The optical wireless communication device 210b then determines whether the operation mode is the commurication mode or the test mode (Step S110) . In a case where the operation mode is determined to be the communication mode in Step S110, the output unit 334 outputs the electric signal converted by the light-receiving unit 332 to the outside of the optical wireless communication device 210b (Step S112), thereby the communication sequence is finished. On the other hand, in a case where the operation mode is determined to be the test mode, the light-emitting unit 336 converts again the electric signal converted by the light-receiving unit 332 into light and sends the light to the optical wireless communication device 210a (Step S114).

Then, in the optical wireless communication device 210a, the light-receiving unit 314 converts the light received from the optical wireless communication device 210b into an electric signal (Step S116). The output unit 312 outputs the electric signal output from the light-receiving unit 314 to the management apparatus 220a (Step S118).

Next, in the management apparatus 220a, the receive unit 408 receives the electric signal output from the optical wireless communication device 210a (Step S120). The compare unit 410 then compares the electric signal transmitted from the transmit unit 402 with the electric signal received by the receive unit 408 (Step S122). The diagnostic unit 412 then determines, based on the result of the comparison by the compare unit 410, whether or not the communication between the optical wireless communication devices 210a and 210b takes place normally (Step S124). In a case where it is determined that the communication takes place normally in Step S124, the communication sequence is finished. Moreover, in a case where it is not determined that the communication takes place normally in Step S124, the transmit unit 402 transmits, to the optical wireless communication device 210a, the setting information used for adjusting the divergence and/or output power of the light sent from the light-emitting unit 310 of the optical wireless communication device 210a (Step S126).

Then, in the optical wireless communication device 210a, the input unit 306 receives the setting information output from the management apparatus 220a (Step S128). The processing unit 304 then adjusts the divergence and/or output power of the light to be sent from the light-emitting unit 310 based on the setting information received by the input unit 306 (Step S130), thereby finishing the communication sequence.

It is preferable that the management apparatus 220a and the optical wireless communication devices 210a and 210b repeat the communication sequence described above so as to appropriately adjust the divergence and/or output power of the light to be sent from the light-emitting unit 310 of the optical wireless communication device 210a.

Moreover, the management apparatus 220a may appropriately adjust the divergence and/or output power of the light sent out from the light-emitting unit 310 of the optical wireless communication device 210a by repeating the above communication sequence while changing or varying the settings of the divergence and/or output power of the light described in the setting information output by the processing unit 406 until optimal communication status has been achieved.

Moreover, although the test and adjustment for the light-emitting unit 310 of the optical wireless communication device 210a by the management apparatus 220a is shown in Fig. 8, the test and adjustment for the light-emitting unit 336 of the optical wireless communication device 210b by the management apparatus 220b can also be performed in the same manner as the optical wireless communication device 210a described above.

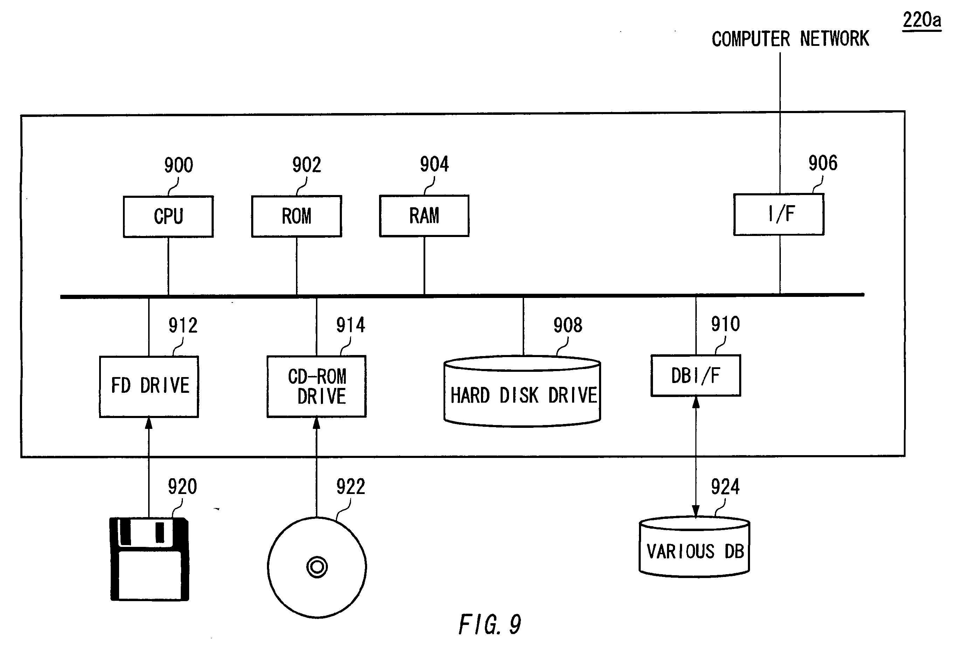

Fig. 9 shows an exemplary hardware configuration of the management apparatus 220a of the present embodiment. The management apparatus 220a includes a CPU 900, a ROM 902, a RAM 904, a communication interface 906, a hard diskdrive 908, a database interface 910, a floppy disk drive 912 and a CD-ROM drive 914. The CPU 900 operates based on at least one program stored in the ROM 902 and RAM 904. The communication interface 906 communicates with the optical wireless communication device 210a or 210b, the management apparatus 220b, the client computer 230a, 230b, 230c or 230d, or the server computer 240 through the computer network. The database interface 910 writes data into a database and updates the contents of the database. The hard disk drive 908 stores setting information and a program for the operation of the CPU 900.

The floppy disk drive 912 reads data or a program from a floppy disk 920 to provide the read data or program to the CPU 900. The CD-ROM drive 914 reads data or a program from a CD-ROM 922 to provide the read data or program to the CPU 900. The communication interface 906 can be connected to the optical wireless communication device 210a or 210b, the management apparatus 220b, the client computer 230a, 230b, 230c or 230d, or the server computer 240 to perform data transmission and data receiving. The database interface 910 can be connected to various databases 924 so as to perform data transmission and data receiving.

Software executed by the CPU 900 is provided to the user while being stored in a recording medium such as the floppy disk 920 or the CD-ROM 922. The software stored in the recording medium may be compressed or not-compressed. The software is installed from the recording medium into the hard disk drive 908, and is then read into the RAM 904 so that the CPU 900 executes the software .

The software provided while being stored in the recording medium, that is the software to be installed into the hard disk drive 908, functionally includes an electric signal generate module, a transmit module, a receive module, a compare module, and a diagnostic module. Operations that are to be executed by the CPU 900 in accordance with instructions of the respective modules to the computer are the same as the functions and operations of the corresponding components in the management apparatus 220a described referring to Figs. 5-8, respectively, and therefore the description thereof is omitted.

Apart or all of the functions and operations of the management apparatus 220a according to all the embodiments described in the present application can be stored in the floppy disk 920 or the CD-ROM 922 shown in Fig. 9 as an example of the recording medium.

These programs may be read directly into the RAM from the recording medium, or read into the RAM after being installed into the hard disk drive from the recording medium. Moreover, the above-mentioned programs maybe stored in a single recording medium or a plurality of recording media. Furthermore, the programs may be stored while being encoded.

As the recording medium, other than the floppy disk and the CD-ROM, an optical recording medium such as a DVD or a PD, a magneto-optical recording medium such as an MD, a tape-like medium, a magnetic recording medium, or a semiconductor memory such as an IC card or a miniature card can be used. Moreover, a storage device such as a hard disk or a RAM provided in a server system connected to an exclusive communication network or the Internet may be used as the recording medium, so that the program can be provided to the management apparatus 220a through the communication network or the Internet. Such a recording medium is used only for manufacturing the management apparatus 220a and it is therefore apparent that manufacturing or selling such a recording medium as business can constitute infringement of the right based on the present application.

As described above, according to the present invention, an optical wireless communication device that can measure a distance to an object, which is to be irradiated with laser light from the optical wireless communication device, and can adjust the divergence and/or output power of the laser light based on the measured distance, can be provided. Moreover, according to the present invention, an optical wireless communication device which allows the user to easily find out or check the communication status of the optical wireless communication device can be provided.

Although the present invention has been described by way of exemplary embodiments, it should be understood that those skilled in the art might make many changes and substitutions without departing from the spirit and the scope of the present invention which is defined only by the appended claims.

## Claims

1. An optical wireless communication device for performing communication by laser light, the optical wireless communication device including a primary light-emitting unit operable to emit a first laser light,
**CHARACTERIZED IN THAT** the optical wireless communication device comprises:
a processing unit operable to adjust divergence of said first laser light based upon a predetermined condition of the optical wireless communication device to optimize the communication performed by said first laser light.

2. An optical wireless communication device as claimed in claim 1, **CHARACTERIZED IN THAT** the optical wireless communication device further comprises a measurement unit operable to measure a distance of separation of the optical wireless communication device from an object which is irradiated with said first laser light, and THAT said processing unit adjusts said divergence of said first laser light based on said measured distance as said predetermined condition of the optical wireless communication device.

3. An optical wireless communication device as claimed in claim 2, **CHARACTERIZED IN THAT** the optical wireless communication device further comprises a secondary light-emitting unit operable to emit a second laser light having an optical axis approximately parallel to an optical axis of said first laser light, and THAT said measurement unit measures said distance by irradiating said object with said second laser light.

4. An optical wireless communication device as claimed in claim 3, **CHARACTERIZED IN THAT** the optical wireless communication device further comprises a detecting unit operable to detect an irradiated position of said object, which is irradiated with said second laser light, from a position that is different from a corresponding position of said secondary light-emitting unit, and THAT said measurement unit measures said distance based on said irradiated position of said object detected by said detecting unit.

5. An optical wireless communication device as claimed in claim 3, **CHARACTERIZED IN THAT** the optical wireless communication device further comprises a light-receiving unit operable to receive said second laser light after reflection from said object, and THAT said measurement unit measures said distance based on a light-emission time at which said secondary light-emitting unit emitted said second laser light and a light-received time at which said light-receiving unit received said second laser light.

6. An optical wireless communication device as claimed in claim 3, **CHARACTERIZED IN THAT** the optical wireless communication device further comprises a light-emission control unit operable to prohibit light emission by said primary light-emitting unit in a case where said secondary light-emitting unit emits said second laser light.

7. An optical wireless communication device as claimed in claim 3, **CHARACTERIZED IN THAT** said second laser light emitted by the secondary light-emitting unit has a higher output power than an output power of said first laser light emitted by said primary light-emitting unit.

8. An optical wireless communication device as claimed in claim 3, **CHARACTERIZED IN THAT** said primary light-emitting unit has a switching rate higher than a switching rate of said secondary light-emitting unit.

9. An optical wireless communication device as claimed in claim 3, **CHARACTERIZED IN THAT** said primary light-emitting unit has a higher operational durability than said secondary light-emitting unit.

10. An optical wireless communication device as claimed in claim 1, **CHARACTERIZED IN THAT** the optical wireless communication device further comprises a measurement unit operable to measure a distance of separation of the optical wireless communication device from an object which is irradiated with said first laser light, and THAT said processing unit adjusts said divergence of said first laser light based on previously stored divergence data that corresponds to said measured distance as said predetermined condition of the optical wireless communication device.

11. An optical wireless communication device as claimed in claim 1, **CHARACTERIZED IN THAT** the optical wireless communication device further comprises:
a measurement unit operable to measure a distance of separation of the optical wireless communication device from an object which is irradiated with said first laser light, and
a memory unit operable to store at least said distance of separation as said predetermined condition of the optical wireless communication device and at least divergence data to correspond with said distance of separation, and THAT
said processing unit adjusts said divergence of said first laser light based on previously stored said divergence data.

12. An optical wireless communication device as claimed in claim 1, **CHARACTERIZED IN THAT** the optical wireless communication device further comprises a memory unit operable to store at least a distance of separation of the optical wireless communication device from an object which is irradiated with said first laser light as said predetermined condition of the optical wireless communication device and at least divergence data to correspond with said distance of separation, and THAT said processing unit adjusts said divergence of said first laser light based on previously stored said divergence data to adjust a transmission range of said first laser light.

13. An optical wireless communication device as claimed in claim 1, **CHARACTERIZED IN THAT** said predetermined condition of the optical wireless communication device is a distance of separation of the optical wireless communication device from a receiving device which is irradiated with said first laser light, and the optical wireless communication device further comprises:
divergence data corresponding to said distance of separation, said divergence data optimizing communication performed by said first laser light with said receiving device when the optical wireless communication device is separated from said receiving device by said distance of separation, and THAT
said processing unit adjusts said divergence of said first laser light based on previously stored said divergence data to adjust a transmission range of said first laser light.

14. An optical wireless communication device for performing communication by using laser light, the optical wireless communication device including a light-emitting unit operable to emit laser light,
**CHARACTERIZED IN THAT** the optical wireless communication device comprises:
a measurement unit operable to measure a distance to an object which is to be irradiated with said laser light; and
a processing unit operable to adjust an output power of said laser light based on said measured distance.

15. A method of adjusting laser light, for use in an optical wireless communication device that performs communication by using said laser light, the laser light adjustment method including emitting said laser light,
**CHARACTERIZED IN THAT** the laser light adjustment method comprises adjusting divergence of said laser light based upon a predetermined condition of the optical wireless communication device.

16. A laser light adjustment method as claimed in claim 15,
**CHARACTERIZED IN THAT** the laser light adjustment method further comprises measuring a distance to an object which is to be irradiated with said laser light, and THAT said divergence of said laser light is adjusted based on said measured distance as said predetermined condition of the optical wireless communication device.

17. A method of adjusting laser light, for use in an optical wireless communication that performs communication by using said laser light, the laser light adjustment method including emitting said laser light,
**CHARACTERIZED IN THAT** the laser light adjustment method comprises:
measuring a distance to an object which is to be irradiated with said laser light; and
adjusting an output power of said laser light based on said measured distance.

18. An optical wireless communication device for performing communication by using light, the optical wireless communication device including a light-receiving unit operable to receive said light,
**CHARACTERIZED IN THAT** the optical wireless communication device further comprises:
an information unit operable to issue a notification indicative of a quality of said light received by said light-receiving unit.

19. An optical wireless communication device as claimed in claim 18, **CHARACTERIZED IN THAT** said light is laser light, and THAT
said light-receiving unit receives said laser light, and
said information unit issues said notification indicative of a quality of said laser light received by said light-receiving unit.

20. An optical wireless communication device as claimed in claim 18, **CHARACTERIZED IN THAT** said light is infrared light, and THAT
said light-receiving unit receives said infrared light, and
said information unit issues said notification indicative of a quality of said infrared light received by said light-receiving unit.

21. An optical wireless communication device as claimed in claim 18, **CHARACTERIZED IN THAT** said quality of said light is an averaged input power of said light in a predetermined time period.

22. An optical wireless communication device as claimed in claim 18, **CHARACTERIZED IN THAT** said information unit includes an indicator operable to emit light as said notification indicative of a quality of said light, and
a light-emission control unit is further provided to control the emission by said indicator based on said quality of said light received by said light-receiving unit.

23. An optical wireless communication device as claimed in claim 22, **CHARACTERIZED IN THAT** said light-emission control unit controls an on-off period during which said emission of light by said indicator goes on and off based on said quality of said light received by said light-receiving unit.

24. An optical wireless communication device as claimed in claim 22, **CHARACTERIZED IN THAT** said light-emission control unit controls an output power of said light emitted by said indicator based on said quality of said light received by said light-receiving unit.

25. An optical wireless communication device as claimed in claim 22, **CHARACTERIZED IN THAT** said indicator includes a plurality of light-emitting elements, and
said light-emission control unit controls which one or more of said plurality of light-emitting elements emits light based on said quality of said light received by said light-receiving unit.

26. An optical wireless communication device for performing optical communication,
**CHARACTERIZED IN THAT** the optical wireless communication device comprises:
a light-receiving unit operable to receive light and to convert said received light into an electric signal;
an output unit operable to output said converted electric signal as an outputted signal;
an input unit operable to receive another electric signal as an inputted signal;
a selector operable to select one of said another electric signal received by said input unit and said converted electric signal, and to output said selected electric signal; and
a light-emitting unit operable to convert said selected electric signal into light and to output said converted light.

27. An optical wireless communication system including a first optical wireless communication device and a second optical wireless communication device that perform optical communication and a management apparatus that manages said optical communication between said first and second optical wireless communication devices,
**CHARACTERIZED IN THAT** said first optical wireless communication device comprises:
a first light-receiving unit operable to receive light sent from said second optical wireless communication device and to convert said received light into an electric signal;
a first output unit operable to output said converted electric signal to said management apparatus;
a first input unit operable to receive an electric signal from said management apparatus; and
a first light-emitting unit operable to convert said received electric signal into light and to send said converted light to said second optical wireless communication device, and THAT
said second optical wireless communication device comprises:
a second light-receiving unit operable to receive said light sent from said first optical wireless communication device and to convert said light into an electric signal; and
a second light-emitting unit operable to convert said electric signal of said second light-receiving unit into light and to send said light converted by said second light-emitting unit to said first optical wireless communication device.

28. An optical wireless communication system as claimed in claim 27, **CHARACTERIZED IN THAT** said management apparatus comprises:
an electric signal generate unit operable to generate an electric signal to be output to said first optical wireless communication device;
a transmit unit operable to transmit said electric signal generated by said electric signal generate unit to said first optical wireless communication device;
a receive unit operable to receive said converted electric signal output from said first optical wireless communication device; and
a compare unit operable to compare said electric signal transmitted from said transmit unit with said converted electric signal received by said receive unit.

29. An optical wireless communication system as claimed in claim 28, **CHARACTERIZED IN THAT** said management apparatus further includes a diagnostic unit operable to determine whether or not said optical communication between said first and second optical wireless communication devices is performed normally, based on a result of the comparison by said compare unit.

30. An optical wireless communication system as claimed in claim 29, **CHARACTERIZED IN THAT** said diagnostic unit determines that said optical communication between said first and second optical wireless communication devices is not performed normally when said electric signal transmitted from said transmit unit is different from said converted electric signal received by said receive unit, and
said management apparatus further includes a processing unit operable to adjust divergence of light sent from said first light-emitting unit of said first optical wireless communication device when said diagnostic unit determines that said optical communication between said first and second optical wireless communication devices is not performed normally.

31. An optical wireless communication system as claimed in claim 29, **CHARACTERIZED IN THAT** said diagnostic unit determines that said optical communication between said first and second optical wireless communication devices is not performed normally when said electric signal transmitted from said transmit unit is different from said converted electric signal received by said receive unit, and
said management apparatus further includes a processing unit operable to adjust an output power of light sent from said first light-emitting unit of said first optical wireless communication device when said diagnostic unit determines that said optical communication between said first and second optical wireless communication devices is not performed normally.

32. An optical wireless communication system as claimed in claim 27, **CHARACTERIZED IN THAT** said second optical wireless communication device further includes:
a second input unit operable to receive an inputted electric signal; and
a selector operable to select one of said inputted electric signal received by said second input unit and said electric signal converted by said second light-receiving unit, and to supply said selected electric signal, and THAT
said second light-emitting unit converts said selected electric signal supplied from said selector into light and sends said converted light thus obtained to said first optical wireless communication device.

33. An optical wireless communication system as claimed in claim 32, **CHARACTERIZED IN THAT** said second optical wireless communication device further includes a mode select unit operable to select one of operation modes of said second optical wireless communication device, said operation modes including a communication mode, in which said optical communication is performed between said first and second optical wireless communication devices, and a test mode, in which a test for said optical communication is performed, and
said selector selects said electric signal converted by said second light-receiving unit when said test mode is set in said second optical wireless communication device by said mode select unit.

34. A management apparatus for managing optical communication between a first optical wireless communication device and a second optical wireless communication device,
**CHARACTERIZED IN THAT** the management apparatus comprises:
an electric signal generate unit operable to generate a first electric signal;
a transmit unit operable to transmit said first electric signal generated by said electric signal generate unit to said first optical wireless communication device;
a receive unit operable to receive, from said first optical wireless communication device, a second electric signal generated by converting said first electric signal generated by said electric signal generate unit into light in said first optical wireless communication device, sending said light converted in said first optical wireless communication device to said second optical wireless communication device, in said second optical wireless communication device, converting said light received from said first optical wireless communication device into a third electric signal and then converting said third electric signal into light in said second optical wireless communication device, sending said light converted in said second optical wireless communication device to said first optical wireless communication device, and, in said first optical wireless communication device, converting said light sent from said second optical wireless communication device to said first optical wireless communication device into said second electric signal;
a compare unit operable to compare said first electric signal transmitted from said transmit unit with said second electric signal received by said receive unit; and
a diagnostic unit operable to determine whether or not said optical communication is performed normally, based on a result of the comparison by said compare unit.

35. A computer-readable medium storing a management program for a management apparatus that manages optical communication between a first optical wireless communication device and a second optical wireless communication device,
**CHARACTERIZED IN THAT** said management program comprises:
an electric signal generate module operable to make said management apparatus generate a first electric signal;
a transmit module operable to make said management apparatus transmit said first electric signal generated by said management apparatus to said first optical wireless communication device;
a receive module operable to make said management apparatus receive, from said first optical wireless communication device, a second electric signal generated by converting said first electric signal generated by said management apparatus into light in said first optical wireless communication device, sending said light converted in said first optical wireless communication device to said second optical wireless communication device, in said second optical wireless communication device, converting said light received from said first optical wireless communication device into a third electric signal and converting said third electric signal into light in said second optical wireless communication device, sending said light converted in said second optical wireless communication device to said first optical wireless communication device, and converting said light sent from said second optical wireless communication device to said first optical wireless communication device into said second electric signal;
a compare module operable to make said management apparatus compare said first electric signal generated by said management apparatus with said second electric signal received by said management apparatus; and
a diagnostic module operable to make said management apparatus determine whether or not said optical communication is performed normally, based on a result of the comparison by said management apparatus.
